# EUROPEAN PATENT APPLICATION

(11) **EP 4 671 011 A1**
(43) Date of publication of application: **31.12.2025**
(21) Application number: 25184985.7
(22) Date of filing: 24.06.2025
(51) Int. Cl.: B60J 5/04

(54) **AUTOVEICOLO**

(30) Priority: 26.06.2024 IT 202400014779
(71) Applicant: FERRARI S.p.A., 41100 Modena (IT)
(72) Inventor: RANDAZZO, Stefano, 41100 MODENA (IT); GARGIULO, Flavio, 41100 MODENA (IT)
(74) Representative: Studio Torta S.p.A.

(57) **Abstract**

A motor vehicle (1) is described with a shell (2) comprising a main body (5) defining a roof (13) and a pair of sides (14), and a pair of doors (7) each movable between an open and closed position in a respective opening (15); each door (7) comprises a first portion (30) and a second portion (31) inclined relative to each other, and each opening (15) comprises a third portion (25) delimited by a relative side (14) and a fourth portion (26) delimited by the roof (13); the first portions (30) of corresponding doors (7) engage the third portions (25) of the relative openings (15) in the closed positions, and the second portions (31) engage the fourth portions (26) in the respective closed positions; the first portions (30) laterally delimit the passenger compartment (3) and the second portions (31) contact the roof (13) to delimit the passenger compartment (3) at the top.

## Description

### CROSS-REFERENCE TO RELATED APPLICATIONS

This patent application claims priority from Italian patent application no. 102024000014779 filed on June 26, 2024, the entire disclosure of which is incorporated herein by reference.

### TECHNICAL FIELD

The present invention concerns a motor vehicle, in particular a sports type motor vehicle with two "butterfly" doors.

### BACKGROUND

Motor vehicles comprising a shell defining a passenger compartment, a rear portion, a front portion and a roof are known.

Motor vehicles of the following types are also known:
- two-seater, in which the passenger compartment defines a seating set for a driver and a passenger; or
- four-seater, in which the passenger compartment defines a front seating set for a driver and a passenger, and a rear seating set for two or three passengers.

The shell comprises, in turn, a main body defining a roof, a bottom and two lateral sides, which delimit the passenger compartment.

Motor vehicles of the following type are also known:
- two-door, in which the shell defines two doors hinged to the main body of the shell at respective front pillars of the main body of the shell; and
- four-door, in which the shell defines two front doors and two rear doors hinged to respective front and rear pillars of the main body of the shell.

Each door is, in a known manner, movable relative to the main body between:
- a closed position, in which it engages a relative lateral opening defined by a corresponding side of the main body and prevents access to and exit from the passenger compartment; and
- an open position in which it disengages the relative opening and allows access to and exit from the passenger compartment.

The openings are delimited at the front by the respective front pillars.

Two-door motor vehicles define the preferred solution in sports type motor vehicles in terms of design and aesthetics.

However, the two-door solution normally makes it more difficult for the passengers to get in and out of the passenger compartment.

Doors hinged to a pillar of the shell so that they move towards the front of the motor vehicle during the movement from the closed position to the open position are commonly known.

"Butterfly" doors, commonly used in two-seater motor vehicles, are also known.

Said "butterfly" doors are hinged to the respective pillar of the shell, so that they are movable upwards towards the roof and externally to the shell, during the movement from the closed position to the open position.

Said "butterfly" doors have a design which is particularly popular in sports type motor vehicles, but are characterized by significant lateral and upper overall dimensions in the open position compared to the closed position.

Said overall dimensions can make access to and exit from the passenger compartment less comfortable when the motor vehicle is parked in spaces limited laterally and at the top, for example in car parks inside buildings.

The need is felt in the sector to develop a four- or five-seater sports motor vehicle with two butterfly doors, which has limited overall dimensions in the lateral and vertical direction with the doors in the open position.

The need is felt in the sector to develop a four- or five-seater sports motor vehicle with two butterfly doors, which ergonomically facilitates passenger access to and exit from the passenger compartment.

### SUMMARY

The object of the present invention is to produce a motor vehicle which meets at least one of the above-mentioned needs.

The above-mentioned object is achieved by the present invention which concerns a motor vehicle as defined by claim 1.

### BRIEF DESCRIPTION OF THE DRAWINGS

For a better understanding of the present invention, a preferred embodiment is described below by way of non-limiting example and with reference to the attached drawings in which:
- figure 1 is a front view of a motor vehicle produced according to the present invention with the doors in the respective open positions and in a car park;
- figure 2 is an overhead view of the motor vehicle of figure 1 with the doors in the respective open positions and in the car park;
- figure 3 is a perspective view of the motor vehicle of figures 1 and 2 with one door in the open position and one door in the closed position; and
- figure 4 illustrates some components of the motor vehicle of figures 1 to 3.

### DESCRIPTION OF EMBODIMENTS

With reference to the attached Figures, the number 1 indicates a motor vehicle comprising a shell 2 defining a passenger compartment 3.

The motor vehicle 1 is, in the case illustrated, a sports motor vehicle.

In particular, the motor vehicle is of the four-seater type with two doors.

It should be noted that in the following part of the present description, expressions such as "at the top", "at the bottom", "at the front", "at the rear" and similar are used with reference to conditions of normal travel of the motor vehicle 1.

It is also possible to define:
- a longitudinal axis X integral with the motor vehicle 1, arranged, in use, horizontal and parallel to a normal direction of travel of the motor vehicle 1;
- a transverse axis Y integral with the motor vehicle 1, arranged, in use, horizontal and orthogonal to the axis X; and
- an axis Z integral with the motor vehicle 1 arranged, in use, vertical and orthogonal to the axes X, Y.

The shell 2 comprises, in turn:
- a main body 5; and
- a pair of doors 7 hinged to the main body 5 around respective axes A.

In further detail, the main body 5 comprises, in turn:
- a front 10 and a rear 11 opposite each other parallel to the axis X;
- a bottom 12 extending between the front 10 and the rear 11 parallel to the axis X; and
- a roof 13 opposite the bottom 12 relative to the axis Z, and each extending between the front 10 and the rear 11.

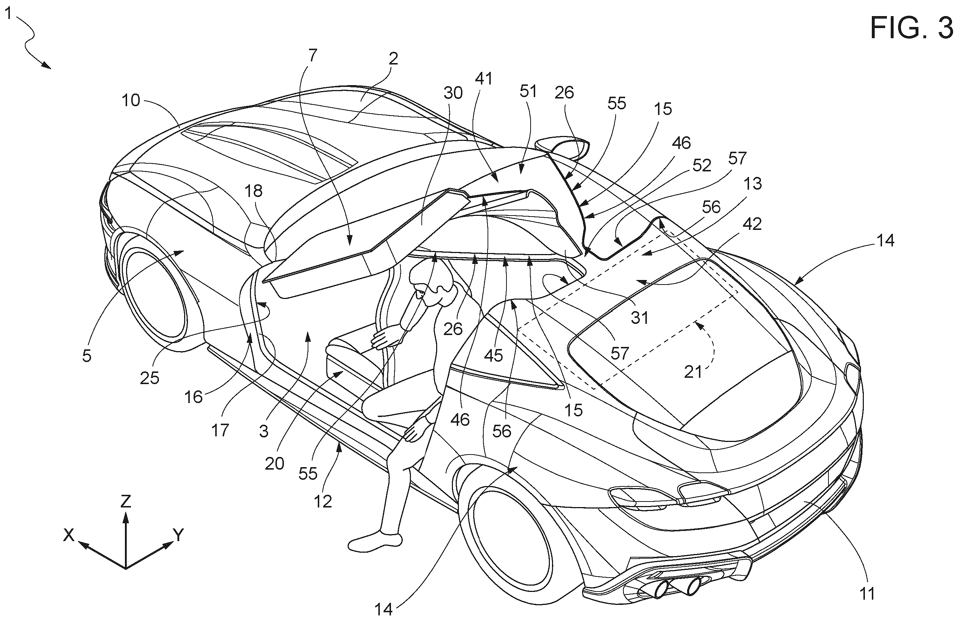

The main body 5 further comprises (Figure 3):
- a pair of sides 14 opposite each other parallel to the axis Y and laterally delimiting the passenger compartment 3;
- a pair of openings 15 having respective portions 25 defined by the respective sides 14; and
- a pair of pillars 16 with mainly vertical extension and delimiting at the front the respective portions 25.

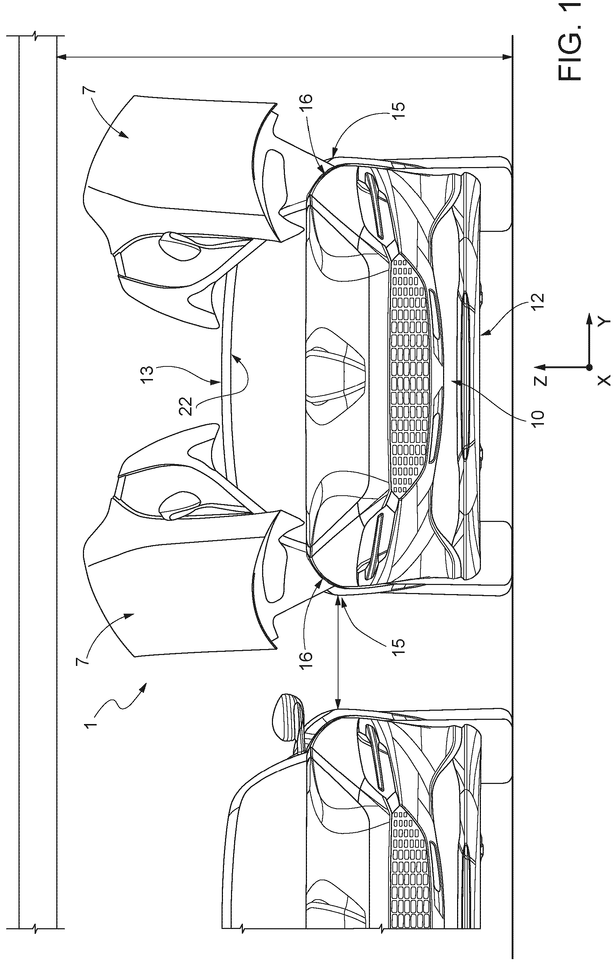

With reference to figures 1 to 3, the doors 7 are movable relative to the main body 5 between:
- a closed position in which they engage the respective openings 15 and prevent access to/exit from the passenger compartment 3; and
- an open position in which they allow access to/exit from the passenger compartment 3.

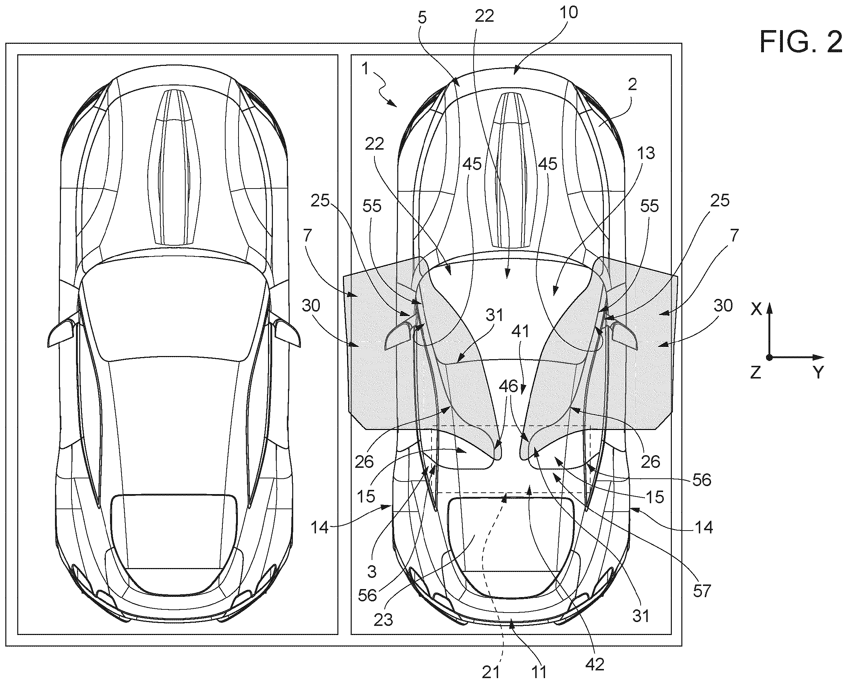

The passenger compartment 3 further defines:
- a front seating set 20 for a driver and a passenger; and
- a rear seating set 21 (only schematically illustrated in Figures 2 and 3) for two passengers.

The passenger compartment 3 is delimited at the front by a windscreen 22 and at the rear by a rear window 23 opposite the windscreen 22 parallel to the axis X.

The doors 7 are of the "butterfly" type. In further detail, the doors 7 are arranged, in the respective open positions, laterally to the main body 10 and rotated towards the roof 13 with respect to the closed position.

Advantageously, each door 7 comprises a portion 30 and a portion 31 respectively lying inclined relative to each other; and each opening 15 comprises a further portion 26 delimited by the roof 13; the portions 30 of the doors 7 engage the portions 25 and the portions 31 of the doors 7 engage the portions 26 of the corresponding openings 15 in the respective closed positions of the doors 7; the portions 30 of the doors 7 laterally delimit the passenger compartment 3 and the portions 31 contact the roof 13 to delimit the passenger compartment 3 at the top, in the closed positions of the respective doors 7.

In further detail, in the open positions of the doors 7, the portions 30 are arranged laterally to the main body 10 and the portions 31 are arranged above the roof 13.

By the term "lying" in the present description we mean the lying of the planes of the portions 30, 31 tangent in the respective section in common.

The roof 13 extends (Figure 3) symmetrically to the axis X and comprises, proceeding parallel to the axis X:
- a section 41 connected to the front 10; and
- a section 42 connected to the rear 11.

The section 41 comprises, in turn, proceeding from the front 10 towards the rear 11 parallel to the axis X:
- a convex region 51; and
- a concave region 52.

The section 41 has a pair of profiles 45 opposite each other parallel to the axis Y.

The profiles 45 delimit the portions 26 of respective openings 15 parallel to the axis Y.

The profiles 45 further comprise, in turn, proceeding from said front 10 towards said rear 11:
- a pair of arcs 55 converging towards each other;
- a pair of arcs 56 diverging from each other and extending from and overlapping at a distance the corresponding first arcs 55, parallel to the axis Y; and
- a pair of segments 57, each interposed between a respective arc 55 and a corresponding arc 56 and parallel to the axis Y.

The profiles 45 contact respective correspondingly shaped profiles 46 defined by the portions 31 of respective doors 7, when the latter are in the closed position.

The distance between the profiles 46 parallel to the axis Y - namely the width of the section 41 of the roof 13 - is progressively decreasing, proceeding parallel to the axis X from the section 41 towards the section 42.

When the doors 7 are in the respective open positions, the section 41 overlaps only a portion of the bottom 12 parallel to the axis Z. The passenger compartment 3 is thus open not only parallel to the axis Y but also parallel to the axis Z, when the doors 7 are in the respective open positions (Figures 2 and 3).

In particular, the section 41 extends above the seating set 20 and at least part of the seating set 21.

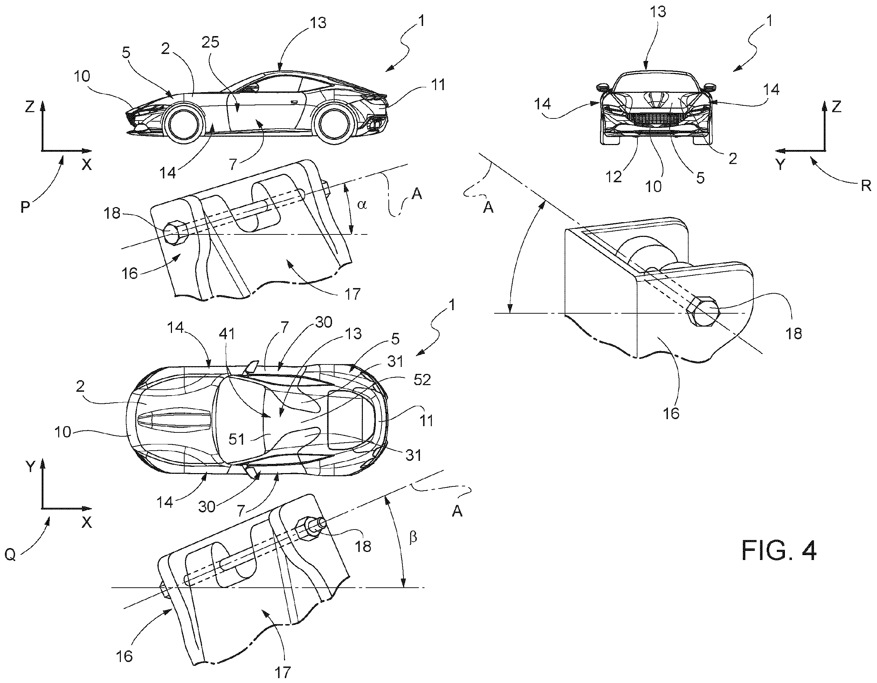

With reference to Figure 4, the axis A is inclined relative to the axes X, Y, Z.

In further detail, the projection of the axis A on a plane P defined by the axes X, Z is inclined relative to the axis X by an angle α ranging from 15 to 20 degrees, in particular equal to 17 degrees.

The projection of the axis A in a plane Q defined by the axes X, Y is inclined relative to the axis X by an angle β ranging from 20 to 25 degrees, in particular equal to 23.4 degrees.

The projection of the axis A in a plane R defined by the axes Z, Y is inclined relative to the axis Y by an angle γ ranging from 30 to 40 degrees.

In particular, each pillar 16 has respective lower and upper ends 17, 18 opposite each other parallel to the axis Z.

The doors 7 are hinged to respective ends 18 of corresponding pillars 16 around the corresponding axes A.

Operation of the motor vehicle 1 is described starting from a condition in which the doors 7 are in the respective closed positions in which they engage the respective openings 15.

In said condition, the passenger compartment 3 is delimited at the top by the roof 13 and by the portions 31 of the doors 7 parallel to the axis Z and laterally by the portions 30 of the doors 7 parallel to the axis Y.

In particular, the portions 30, 31 of the doors 7 engage the respective portions 25, 26 of the relative openings 14.

Following rotation with respect to the relative pillars 16 around the respective axes A in a first direction, the doors 7 disengage the corresponding openings 15 and move to the respective open positions (Figure 3).

More precisely, the rotation around the relative axes A determines the movement of the portions 30 of the doors 7 laterally to the shell 2 and towards the outside of the shell 2 and the simultaneous raising of the portions of the doors 7 above the roof 13.

Due to the fact that the openings 15 extend also above the bottom 12, the passengers can more easily get out of or into the rear seating set 21 through the openings 15.

The doors 7 are then re-set to their respective closed positions by means of a simple rotation with respect to the relative pillars 16 and around the respective axes A in a second direction opposite the first direction.

From an examination of the motor vehicle 1 according to the present invention, the advantages it offers are evident.

In particular, the portions 30, 31 of corresponding doors 7 engage the respective portion 25, 26 of the relative openings 15 when the doors 7 are in the respective closed positions. The portions 30 laterally delimit the passenger compartment 3 and the portions 31 contact the roof 13 thus delimiting at the top the passenger compartment 3 in the respective closed positions of the doors 7.

This allows particularly wide openings 15 to be obtained with respective portions 26 arranged at the rear seating set 21, thus facilitating access (exit) of the passengers to (from) the seating set 21, as illustrated in Figure 3.

It is thus possible to produce a four-seater sports motor vehicle with two "butterfly" doors 7.

The axes A are inclined relative to the axes X, Y, Z. It is thus possible to limit the overall dimensions of the doors 7 exceeding the passenger compartment 3 parallel to the axes Y, Z in the open positions to values below the normal values present in indoor car parks, as can be seen in Figures 2 and 3.

Lastly it is clear that modification and variations that do not depart from the protective scope defined by the claims can be made to the motor vehicle 1 produced according to the present invention.

## Claims

1. A motor vehicle (1) comprising:
- a first axis (X) parallel to a travel direction of the motor vehicle (1); and
a shell (2) comprising, in turn:
a main body (5) defining a roof (13) at least partly delimiting a passenger compartment (3) parallel to a second axis (Z) of said motor vehicle (1) orthogonal to said first axis (X); and a pair of sides (14) laterally delimiting said passenger compartment (3) and opposite one another parallel to a third axis (Y) orthogonal to said first and second axis (X, Z); and
a pair of doors (7), each movable relative to said main body (5) between a closed position, in which it engages a respective opening (15) defined by said main body (5) and forbids access to and exit from said passenger compartment (3), and an open position, in which it leaves said respective opening (15) free and allows access to and exit from said passenger compartment (3);
said passenger compartment (3) comprising, in turn:
- a first seating set (20) designed to be engaged by a driver and a passenger;
- a second seating set (21) designed to be engaged by at least two passengers and located, in use, behind said first seating set (20) with reference to a normal travel direction of said motor vehicle (1) parallel to said first axis (X);
each door (7) being located, in the respective open position, on the side of said main body (10) parallel to said third axis (Y) and being at least partly rotated upwards relative to the respective closed position with reference to said second axis (Z);
**characterized in that** each door (7) comprises a first portion (30) and a second portion (31) inclined relative to one another, and **in that** each opening (15) comprises a third portion (25) delimited by a relative side (14) and a fourth portion (26) delimited by said roof (13);
said first portions (30) of corresponding doors (7) engaging the respective third portions (25) of the relative openings (15) in the respective closed positions and said second portions (31) of corresponding doors (7) engaging the respective fourth portions (26) of said openings (15) in the respective closed positions;
said first portions (30) laterally delimiting said passenger compartment (3) and said second portions (31) contacting said roof (13) to delimit said passenger compartment (3) at the top parallel to said second axis (Z), in the respective closed positions.

2. The motor vehicle according to claim 1, **characterized in that** said body (2) comprises, moving parallel to said first axis (X), a front (10) and a rear (11) spaced apart from one another parallel to said first axis (X);
said roof (13) comprising, in turn, moving parallel to said first axis (X) and moving from said front (10) towards said rear (11):
- a fifth portion (41) connected to said front (10); and
- a sixth portion (42) connected to said rear (11);
said fifth portion (41) comprising a pair of first concave profiles (45) delimiting respective openings (15);
said second portions (31) comprising respective second profiles (46) with a conformation corresponding to the respective first profiles (45);
said first profiles (45) and the corresponding second profiles (46) cooperating with one another, when said door (7) is in said closing position.

3. The motor vehicle according to claim 1 or 2, **characterised in that** said fourth portions (26) of respective openings (15) at least partially extend above said second seating set (21) with reference to said second axis (Z).

4. The motor vehicle according to claim 2 or 3, **characterized in that** said fifth portion (41) comprises, moving from said front (10) towards said rear (11):
- a first convex region (51); and
- a second concave region (52).

5. The motor vehicle according to any one of the claims from 2 to 4, **characterized in that** said first profiles (45) comprises, in turn, moving from said front (10) towards said rear (11):
- a pair of first arcs (55) converging towards one another;
- a pair of segments (57) parallel to said third axis (Y); and
- a pair of second arcs (56) diverging from one another and extending, at a distance from the corresponding first arcs (55), parallel to said third axis (Y).

6. The motor vehicle according to any one of the preceding claims, **characterized in that**, in said open positions of said doors (7), the corresponding first portions (30) are located on the sides of said main body (10) parallel to said third axis (Y) and the corresponding second portions (31) are located above said roof (13) parallel to said second axis (Z).

7. The motor vehicle according to any one of the preceding claims, **characterized in that** each one of said doors (7) is hinged to said main body (5) of said shell (2) around a relative fourth axis (A);
said fourth axis (A) being inclined relative to at least one of said first, second and third axis (X, Y, Z).

8. The motor vehicle according to claim 7, **characterized in that** said fourth axis (A) is inclined relative to each one of said first, second and third axis (X, Y, Z).

9. The motor vehicle according to claim 7 or 8, **characterized in that** a first projection of said fourth axis (A) in a first plane (P) defined by said first and second axis (X, Z) is inclined relative to said first axis (X) by a first angle (α) ranging from 15 to 20 degrees; and/or
**characterized in that** a second projection of said fourth axis (A) in a second plane (Q) defined by said first and third axis (X, Y) is inclined relative to said first axis (X) by a second angle (β) ranging from 20 to 25 degrees; and/or **characterized in that** a third projection of said fourth axis (A) in a third plane (R) defined by said second and third axis (Z, Y) is inclined relative to said second axis (Z) by a third angle (γ) ranging from 30 to 40 degrees.

10. The motor vehicle according to any one of the claims from 7 to 9, **characterized in that** said main body (5) comprises a pair of pillars (16) delimiting said first portions of respective openings (15);
each pillar (16) comprising, in turn, a first upper end (18) and a second lower end (17) opposite one another parallel to said second axis (Z);
each door (7) being hinged to said first end (18) of the relative pillar (16) around the corresponding fourth axis (A).
